(19) **Europäisches Patentamt**

**European Patent Office**

**Office européen des brevets**

(11) **EP 1 047 896 B1**

(12) **FASCICULE DE BREVET EUROPEEN**

(45) Date de publication et mention
de la délivrance du brevet:
**19.05.2004   Bulletin 2004/21**

(51) Int Cl.⁷: **F16K 31/04**

(21) Numéro de dépôt: **99956123.6**

(22) Date de dépôt: **23.11.1999**

(86) Numéro de dépôt international:
**PCT/FR1999/002881**

(87) Numéro de publication internationale:
**WO 2000/031449 (02.06.2000 Gazette 2000/22)**

(54) **VANNE DE CARBURANT A COMMANDE DIRECTE POUR CIRCUIT D'INJECTION DE DEBIT CARBURANT**

DIREKT GESTEUERTER BRENNSTOFFHAHN FÜR EIN BRENNSTOFF- EINSPRITZSYSTEM

DIRECT CONTROL FUEL VALVE FOR FUEL FLOW INJECTING CIRCUIT

(84) Etats contractants désignés:
**DE FR GB IT**
Etats d'extension désignés:
**RO**

(30) Priorité: **24.11.1998  FR 9814805**

(43) Date de publication de la demande:
**02.11.2000   Bulletin 2000/44**

(73) Titulaire: **HISPANO SUIZA**
**92707 Colombes Cedex (FR)**

(72) Inventeurs:
• **BROCARD, Jean-Marie**
  **F-77950 Rubelles (FR)**
• **D'AGOSTINO, Guy**
  **F-94400 Vitry sur Seine (FR)**

• **ESQUEVIN, Bertrand**
  **F-77115 Blandy les Tours (FR)**
• **LEBOEUF, Christian**
  **F-91800 Brunoy (FR)**
• **PRADES, Philippe**
  **F-77000 Vaux le Pénil (FR)**

(74) Mandataire: **Brykman, Georges et al**
**c/o Société de Protection des Inventions,**
**3, rue du Docteur Lancereaux**
**75008 Paris (FR)**

(56) Documents cités:
**FR-A- 2 165 379          FR-A- 2 216 503**
**US-A- 4 398 562          US-A- 4 754 949**
**US-A- 5 769 390**

## Description

### Domaine de l'invention

L'invention se situe dans le domaine des vannes à carburant pour circuit d'injection de débit carburant d'un turboréacteur ou plus généralement d'un moteur d'avion. La vanne est destinée à être insérée dans une boucle d'asservissement du débit de carburant dirigé vers les injecteurs d'un moteur d'avion.

### Art antérieur

Les vannes de carburant sont bien connues dans l'art elles permettent par un réglage de la section de passage du carburant de régler le débit à diriger vers les moteurs. Une telle vanne est connue par exemple du brevet FR 2 747 174 déposé par la Société d'Application des Machines Motrices pour un distributeur hydraulique pour servo-commande d'aéronef. Un distributeur de la vanne décrite dans ce brevet comprend un boisseau monté rotativement dans une fourrure fixe logée dans un corps avec interposition d'un élément annulaire entre le boisseau et la fourrure. Le boisseau comporte une ouverture qui peut être plus ou moins en coïncidence avec une ouverture de la fourrure dans laquelle tourne le boisseau. La rotation du boisseau commande la section de passage du carburant et donc le débit du carburant. Dans les vannes réglées par doseur à asservissement électro-hydraulique, la rotation du boisseau est assurée par un système de régulation hydraulique dans lequel le fluide de régulation est constitué par du carburant sous pression.

Les avantages d'une vanne à carburant de ce type sont bien connus, et notamment sa fiabilité compte tenu de son ancienneté, n'est plus à démontrer. Toutefois, les vannes réglées par doseur à commande par asservissement électro-hydraulique fonctionnant avec carburant présentent des inconvénients, notamment il faut davantage de carburant au niveau de la pompe pour alimenter les dispositifs de commande de régulation, ceci notamment en raison du fait que les dispositifs de commande de régulation doivent fonctionner lorsque le débit est à son niveau le plus bas. Ce surdimensionnement de la pompe et le poids du carburant et des dispositifs de régulation sont coûteux en terme de masse.

Ces dispositifs peuvent être grippés en cas de pollution du carburant ce qui accroît le risque de pannes. Pour éviter le risque de gel du carburant dans les dispositifs de régulation, le carburant, lorsque l'avion est à haute altitude doit être chauffé préalablement à son introduction dans les dispositifs de régulations. Si la pompe est surdimensionnée pour assurer un débit satisfaisant pour les dispositifs de régulation, l'échangeur thermique assurant ce chauffage du carburant doit être dimensionné en conséquence, ce qui entraîne un surcroît de masse. Le test de la vanne nécessite sa mise sous pression ce qui ne peut se faire que par mise en route des moteurs de l'avion. Enfin, en cas de changement de la vanne il est nécessaire de pratiquer l'intervention en atelier pour éviter l'introduction de corps étrangers dans la vanne, ce qui fait qu'en pratique la vanne n'est pas changeable rapidement en ligne.

La demande brevet FR 2 165 379 déposée le 13 septembre 1972 avec revendication de la priorité de la demande US-A-208 249 du 15 décembre 1971 décrit une vanne à obturateur 20 sphérique. Cet obturateur 20 est constitué par une sphère dans laquelle est creusé un cylindre traversant.

Un moteur 84 situé à l'extérieur d'un corps de vanne 12 entraîne l'obturateur 20 en rotation par l'intermédiaire d'un arbre moteur 86, d'un réducteur extérieur au corps 12 et d'un pignon de sortie 78. Le pignon de sortie 78 engrène sur un secteur denté 60 lié à l'obturateur. Le trajet du liquide circulant dans la vanne suit une trajectoire dont la ligne axiale se situe dans un plan perpendiculaire à l'axe de rotation de l'obturateur. L'étanchéité extérieure de la vanne est assurée par des joints 26,28 et une pièce rapportée en Téflon 30.

Il est bien connu que l'étanchéité entre deux pièces en mouvement l'une par rapport à l'autre exige un serrage de la pièce mobile qui nécessite un couple plus fort sur la pièce mobile.

### Brève description de l'invention

La vanne selon l'invention ne fonctionne pas à l'énergie hydraulique mais à l'énergie électrique.

De la sorte, il n'y a plus de risque de pollution du carburant engendrant des pannes et il n'y a pas non plus besoin de chauffage du carburant ce qui diminue la masse de l'échangeur et globalement la fiabilité du dispositif selon l'invention s'en trouve améliorée. La suppression du carburant comme vecteur de motorisation permet de diminuer la masse de la fonction occupée par les dispositifs de régulation de la vanne et donc la masse du turboréacteur s'en trouve diminuée. La diminution de la masse résulte aussi d'un dimensionnement plus faible des systèmes de pompage des circuits de carburant du turboréacteur. Ce dimensionnement est, comme signalé plus haut, lié au débit nécessaire pour l'activation des sous ensembles hydrauliques lorsque le turboréacteur fonctionne à très faible vitesse et donc lorsque la pompe délivre de bas débits. L'absence de débit d'actuation pour la vanne objet de l'invention, permet donc d'améliorer le dimensionnement du système de pompage en terme de masse. Donc, globalement la masse du turboréacteur s'en trouve diminuée. La vanne, objet de l'invention, peut aussi être prépositionnée afin de délivrer exactement le débit d'allumage du turboréacteur ou de la réchauffe, lorsque le réacteur possède un système de réchauffe, par exemple dans le cas des moteurs militaires, avant même que la vanne ne soit traversée par le carburant. En conséquence les performances du turboréacteur en terme de capacité et rapidité d'allumage s'en trouvent grandement améliorées.

La vanne objet de l'invention peut être testée sans apport d'énergie hydraulique cela signifie qu'elle peut être testée sans que le turboréacteur ne soit en rotation. La maintenance de ce dernier s'en trouve donc grandement améliorée. Enfin, la vanne selon l'invention peut être changée et testée sans qu'il soit nécessaire comme signalé plus haut de mettre en route le réacteur et donc la vanne selon l'invention devient un élément changeable en ligne.

En résumé, une vanne selon l'invention présente une meilleure disponibilité en usage en service une sécurité et une fiabilité améliorés des coûts de maintenance et de possession diminuées, une maintenance améliorée, des performances améliorées et tout cela avec une réduction du poids et des dimensions attribuées à la fonction de commande de la vanne.

Selon l'invention, la commande de la vanne est effectuée au moyen d'un ensemble moteur électrique, d'un réducteur mécanique à fort rapport de réduction recevant d'un côté l'axe du moteur électrique et commandant de l'autre au moyen d'un système d'engrenage la position d'un boisseau d'un distributeur, et dudit distributeur. En résumé, l'invention est relative à une vanne de carburant à commande électrique directe comportant :

- un ensemble de distribution de carburant comportant

  • une ouverture d'arrivée de carburant
  • une fourrure comportant une première ouverture
  • un boisseau mobile dans la fourrure comportant une seconde ouverture
  • une sortie de carburant dont une section d'ouverture est fonction d'une surface de coïncidence entre la première ouverture de la fourrure et la seconde ouverture du boisseau

- des moyens de commande de la position du boisseau permettant de faire varier la valeur de la section de coïncidence entre les première et seconde ouvertures vanne caractérisée en ce que les moyens de commande de la position du boisseau comportent logés dans un corps de vanne communiquant avec l'ensemble de distribution,

- un moteur électrique sans balai rotatif autour d'un axe AA', ce moteur entraînant un ensemble réducteur mécanique à engrenage, cet ensemble comportant un arbre d'entrée et un pignon ou arbre de sortie de l'ensemble réducteur, en sorte qu'un mouvement de rotation du moteur entraîne un mouvement du boisseau et une modification de la surface de coïncidence entre les première et seconde ouvertures.

L'ouverture d'arrivée du carburant se fait selon une section dont la surface est fixe et perpendiculaire à l'axe de rotation du boisseau. Ainsi, le carburant arrive parallèlement à l'axe de rotation du boisseau. Il ressort selon une ouverture située sur une paroi cylindrique du boisseau axée sur l'axe du boisseau. La sortie du carburant s'effectue donc perpendiculairement à l'axe du boisseau.

Il est à remarquer qu'une ouverture peut être composée de plusieurs trous ou fentes d'une paroi. Il est souhaitable que l'ensemble des trous du boisseau formant ensemble l'ouverture du boisseau assurent une symétrie de révolution de l'ouverture autour d'un axe de rotation du boisseau.

Il en va de même des ouvertures de la fourrure. Il y aura donc en général au moins deux ouvertures.

Bien que dans l'exemple de description qui va suivre le moteur soit un moteur rotatif, et le boisseau un boisseau rotatif, rien ne s'oppose à ce que le moteur soit un moteur à mouvement axial entraînant un boisseau à mouvement axial ou rotatif. De préférence, pour une meilleure sûreté de fonctionnement, le moteur est équipé de stators redondants. Le rotor du moteur est de préférence monobloc équipé de pans parallèles à l'axe du rotor, par exemple six ou huit pans selon une section hexagonale ou octogonale. De préférence, le moteur est équipé de moyens permettant de connaître à tout moment la position angulaire du rotor autour de son axe, par exemple des aimants placés sur chacun des pans dont le flux fait varier un signal transmis par un ou plusieurs capteurs à effet hall disposés par exemple axialement à la même hauteur que les aimants.

Le moteur stator et rotor logé dans le corps de vanne en communication avec l'ensemble de distribution est immergé dans le carburant chaud sous pression, ce qui supprime les problèmes d'étanchéité entre le boisseau et le moteur.

**Brève description des dessins**

D'autres avantages et caractéristiques de l'invention apparaîtront à la lecture de la description détaillée d'un exemple de réalisation de la présente invention qui sera fait avec les dessins annexés, dans lesquels :

- la figure 1 représente une description schématique de la présente invention ;
- la figure 2 représente une coupe longitudinale d'un exemple de réalisation d'une vanne telle que représentée sur la figure 1 ;
- la figure 3 représente une coupe selon la ligne BB de la figure 2 ;
- la figure 4 représente un mode de réalisation d'une ouverture de la fourrure.

**Description détaillée d'un mode de réalisation**

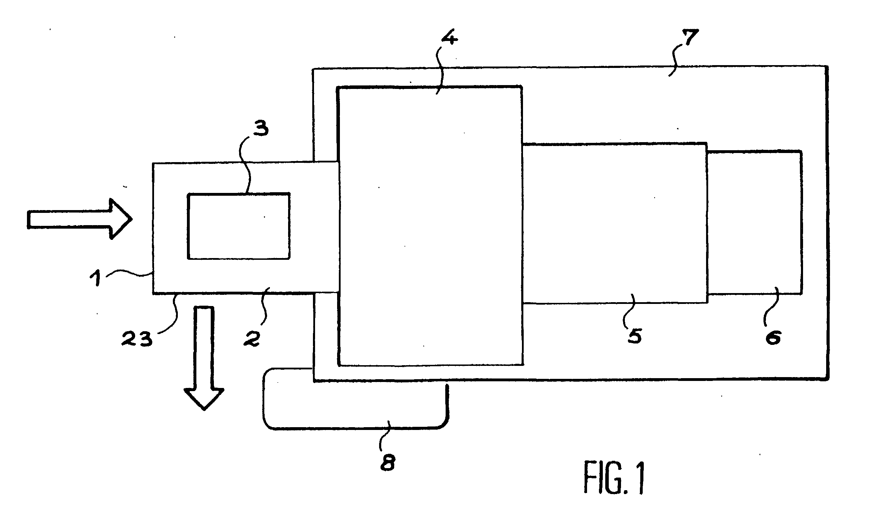

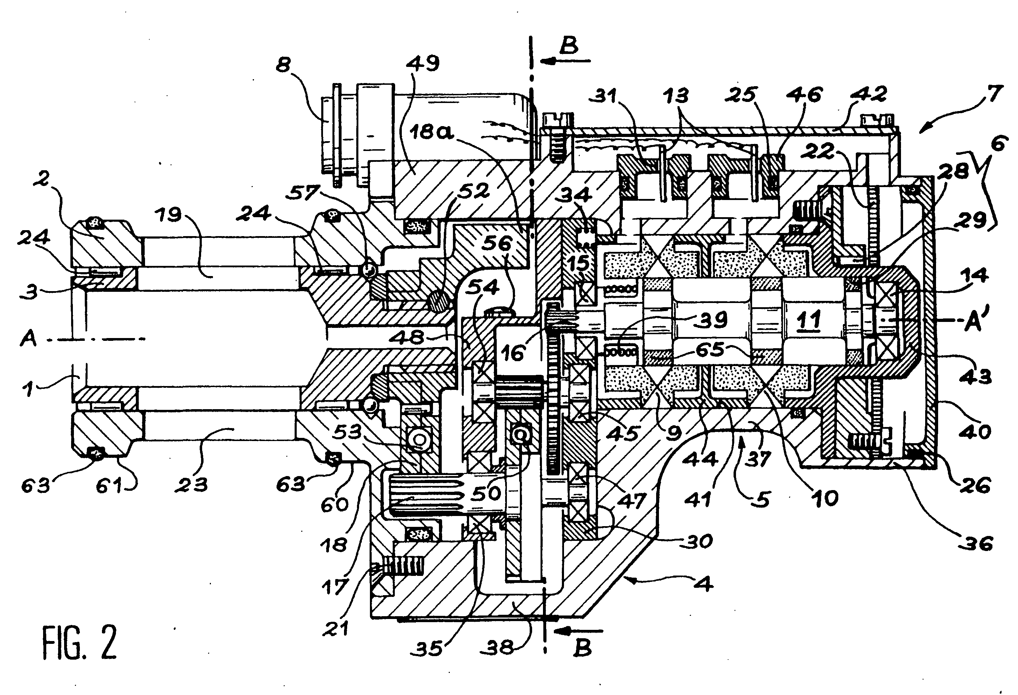

Dans la description qui va suivre, les éléments ayant la même fonction portent les mêmes numéros de référence. En se reportant à la figure 1, la vanne selon l'invention comporte une arrivée de carburant 1, une fourrure 2 à l'intérieur de laquelle peut tourner un boisseau 3 comportant une ouverture non représentée sur la figure 1. Le boisseau 3 est entraîné en rotation par un réducteur mécanique à fort rapport de réduction 4. Ce réducteur mécanique est lui-même entraîné en rotation par un ensemble moteur électrique redondant 5. On veut dire par redondant que le moteur électrique 5 comporte un double stator ce qui fait qu'en cas par exemple de coupure ou autre panne il est possible de commuter d'un stator sur l'autre. Le moteur 5 comporte des capteurs de positionnement 6 permettant à tout moment de connaître la position du moteur 5 et donc du boisseau. L'ensemble moteur 5 et réducteur 4 est logé à l'intérieur d'un corps 7. Le corps 7 comporte des moyens non représentés figure 1, d'une part pour fixer la fourrure 2, de façon étanche, sur le corps et d'autre part des connecteurs 8 enfichables d'alimentation du moteur électrique. Les connecteurs enfichables 8 sont redondants en ce sens qu'ils comportent des connecteurs nécessaires aux alimentations des premier et second stators du moteur. Ils comportent également les connexions nécessaires à un circuit imprimé d'élaboration de signaux de position du moteur dont il sera parlé plus loin. Les éléments représentés figure 1 apparaissent plus en détail sur la figure 2 qui est une coupe longitudinale d'une vanne selon l'invention.

En se reportant à la figure 2, le corps 7, en alliage léger par exemple un alliage d'aluminium comporte du haut vers le bas, dans une direction axiale AA' du corps 7, une extrémité supérieure 36, une partie centrale haute 37, une partie centrale basse 38 et une extrémité inférieure 49. Les parties centrales haute 37 et basse 38 logent le moteur 5 et le réducteur 4 respectivement.

L'extrémité supérieure 36 reçoit un support de palier 43 supérieur en métal dur par exemple en titane ou alliage au titane. Outre sa fonction de support de palier, le support de palier 43 assure avec un joint torique situé à l'intérieur du corps l'étanchéité au carburant.

L'extrémité inférieure 49 du corps 7 reçoit la fourrure 2 du distributeur. L'étanchéité entre la fourrure 2 et le corps 7 est assurée par un joint torique situé dans un plan perpendiculaire à l'axe AA'.

Lorsqu'il est parlé d'étanchéité entre le corps 7 et la fourrure 2, d'une étanchéité vis-à-vis de l'extérieur du corps de vanne. Par contre, il n'y a pas étanchéité entre l'ensemble de distribution, comportant essentiellement la fourrure 2 et le boisseau 3, et le corps 7 logeant l'ensemble moteur réducteur. Cette caractéristique avantageuse permet d'éviter les problèmes de fuite dus à la présence de joints rotatifs.

Le moteur 5 est comme signalé plus haut sans balai et à courant continu. Il comporte deux stators redondants 9 et 10 montés glissants dans un alésage 41 de la partie centrale haute 37 du corps 7. Les stators 9 et 10 sont positionnés et séparés l'un de l'autre par une entretoise 44. L'entretoise 44 est formée d'une cloison annulaire en appui sur l'alésage 41, de laquelle jaillit vers l'intérieur une cloison radiale.

C'est cette cloison radiale qui assure la séparation entre les enroulements stators 9 et 10.

L'entretoise 44 est maintenue plaquée axialement par des ressorts axiaux 34 logés au moins pour partie dans des trous borgnes d'un support 30 de paliers intermédiaires dont il sera parlé plus loin. Les deux stators 9, 10 sont mis en phase l'un par rapport à l'autre par des goupilles.

Les traversées électriques pour amener le courant de la prise 8 aux enroulements des stators 9 et 10 se font par deux traversées étanches 13 du corps 7 réalisées par des perles de verre 13 coulées dans des trous traversants montés dans une pièce 46.

Cette pièce 46 est montée dans un alésage extérieur du corps 7 d'axe perpendiculaire à l'axe AA'. L'étanchéité est assurée par un joint torique 25 et la fixation de la pièce 46, de préférence en acier est assurée par vis.

Le moteur 5 comporte également un rotor 11 monobloc. Ce rotor dispose de huit pans plats formant octogone, les plans de ces pans étant parallèles à l'axe AA'. Des aimants 65 constitutifs des pales du rotor 11 sont fixés sur chacun des huit pans. Ces aimants sont de préférence collés, rectifiés et frettés. Ils sont de préférence en terre rare, par exemple en samarium cobalt de façon à avoir un poids faible. L'axe matériel du rotor est axé sur l'axe AA' du corps. La partie supérieur de l'axe est frettée dans un roulement à bille 14 serti dans le support de palier 43. Des aimants 29 de commutation et de détection sont également fixés sur chacun des huit pans du rotor à proximité de la partie Supérieure du rotor. La partie inférieure de l'axe du rotor 11 est frettée dans un roulement à billes 15 serti dans le support de palier intermédiaire 30. Les roulements 14 et 15 de l'axe du rotor 11 sont mis en contrainte au moyen d'un ressort de mise en contrainte 39, exerçant une poussée axiale sur les bagues intérieures des roulements. Cette contrainte réduit les jeux différentiels et rattrape les jeux différentiels provenant de différences de température.

Le moteur entraîne le boisseau 3 par l'intermédiaire d'un ensemble réducteur 4. Le réducteur 4 est à pignons droits. Il comporte trois étages de réduction dont les deux derniers sont à rattrapage de jeu.

Le support de palier intermédiaire 30, loge en plus du roulement 15 de l'extrémité inférieure de l'axe rotor, des roulements 45, 47 guidant des extrémités supérieures de pignons ou axes de roues dentées du réducteur. Les extrémités inférieures de ces pignons ou axes de roues dentées sont guidées par des roulements 54, 35 logés dans un support de palier inférieur 48.

Au troisième étage du réducteur un pignon double 17 guidé par les roulements 47 et 35 entraîne un secteur denté 18 solidaire du boisseau 3.

Les éléments élastiques de rattrapage de jeu 50, 53 réduisent de façon en elle-même connue, le jeu entre des roues ou secteurs dentés constituant les deuxième et troisième étages de réduction.

Les supports de palier intermédiaire 30 et inférieur 48 sont des pièces en aluminium qui viennent se loger dans des évidements prévus à cet effet dans la partie centrale basse 38 du corps 7. Il sera vu plus loin que le support 48 loge également des butées élastiques limitant la course du boisseau 3.

Tous les roulements de guidage des pignons sont sertis par billes dans les supports de palier 30 et 48.

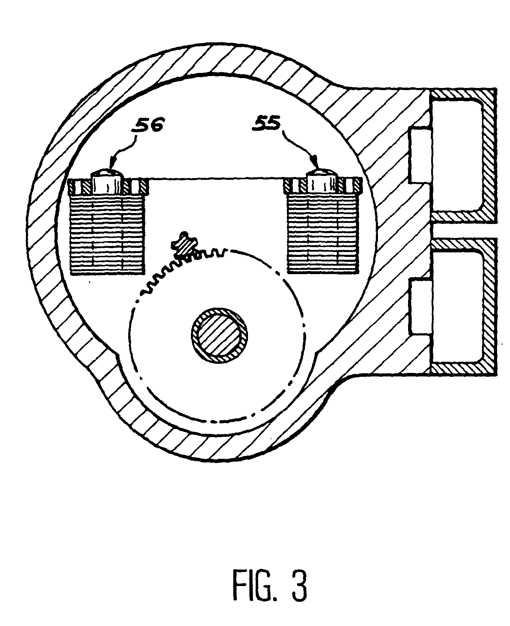

Comme représenté figure 3, une butée 52 fixée par vis sur des cannelures mâles du boisseau 3 délimite le débattement angulaire du boisseau 3 en venant en butée sur des butées élastiques 55, 56 logées dans le support de palier inférieur 48 et constituées par un doigt mobile, un écrou de retenu et des rondelles élastiques.

L'ensemble de distribution hydraulique constitué par la fourrure 2 et le boisseau 3 est vissé au moyen de vis 21 à l'extrémité inférieure 49 du corps 7. Le boisseau 3 est, de préférence, centré par des roulements à aiguilles 24 insérés entre la fourrure 2 et le boisseau 3. Il est de préférence maintenu axialement par une butée à billes 57 pour réduire le couple de frottement entre le boisseau 3 et la fourrure 2. La fourrure est destinée à recevoir une cavité réceptrice non représentée. Cette réception se fait par un ensemble de deux paliers cylindriques extérieurs 60, 61 de la fourrure 2. Ces paliers portent des joints toriques 63. De préférence, le palier 61 qui pénètre le plus avant dans la cavité de raccordement a un diamètre plus petit que le palier 60 qui se trouve plus près du corps 7 et est enfiché le dernier. De cette façon, le montage de la cavité réceptrice peut se faire sans risque de blessure des joints d'étanchéité 63.

Le dosage du carburant se fait par deux fentes 23 de formes exponentielles placées sur la fourrure 2 de façon symétrique par rapport à l'axe AA' du boisseau. Le boisseau 3 reçoit deux fentes 19 triangulaires. La section de passage du carburant est une fonction de la surface de coïncidence des fentes 19 et 23.

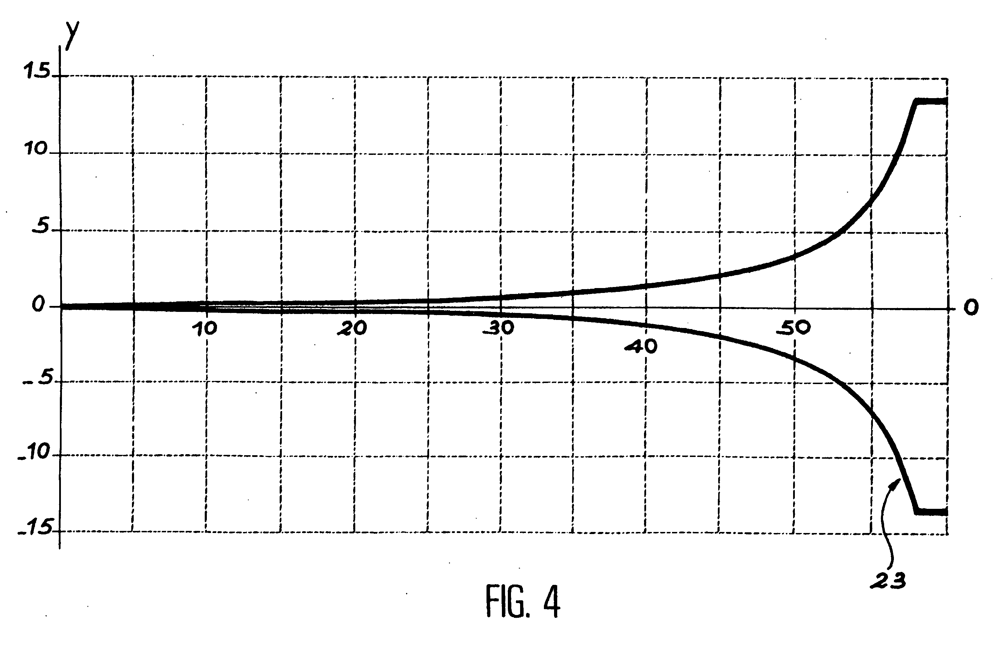

La forme d'une fente 23 exponentielle de la fourrure 2 est représentée figure 4. Elle est représentée sous forme d'un graphique faisant apparaître en abscisse des valeurs angulaires de rotation autour de l'axe du boisseau 3 et en ordonnée y des valeurs de longueur de la fente mesurée à partir d'un plan de symétrie de la fente 23 perpendiculaire à l'axe AA'. L'intérêt d'avoir une ouverture 23 de forme exponentielle tient à la possibilité de garder constante l'erreur relative de débit due à l'erreur de positionnement.

De préférence, la fente est réalisée par électroérosion et la fourrure 2 et le boisseau 3 sont en acier à roulement inoxydable.

La fente est dite de forme exponentielle parce que la distance, entre un plan de référence perpendiculaire à l'axe du boisseau qui dans l'exemple représenté est le plan de symétrie de la fente, et le bord de la fente est croissante de façon exponentielle avec la valeur du secteur angulaire de l'ouverture sur la majeure partie du secteur angulaire. Dans l'exemple représenté figure 4, l'ouverture 23 est exponentielle entre 0 et 58° puis rectangulaire entre 58 et 60°.

Des capteurs à effet hall 28 situés dans une direction axiale à la hauteur des aimants 29 de commutation et de détection émettent un signal variable avec la position relative de l'aimant 29 le plus proche du capteur. Un ensemble de trois capteurs 28 associé aux huit aimants 29 placés sur chacune des huit faces du rotor 11 permet de déterminer vingt quatre positions du moteur. La position du moteur est ainsi connue à $\frac{360}{24°}$ = 15° près. Compte tenu du rapport de réduction N entre le moteur et le boisseau, la position du boisseau est connue à $\frac{15°}{N}$ près. Par exemple, si N est compris entre 500 et 1000, la position du boisseau est connue avec une précision comprise entre 0,015 et 0,03°. La précision absolue de positionnement du boisseau est ainsi constante et ne dépend que du nombre de positions moteur que l'on peut connaître et du rapport de réduction qui est constant. Dans ces conditions de constance de l'erreur absolue de position du boisseau, la forme exponentielle de l'ouverture permet de garder constante l'erreur relative sur le débit de carburant. Les capteurs 28 sont placées en dehors de la partie du corps 7 qui contient du carburant. Ils sont protégés par le support de palier arrière 43. Ils sont montés sur un circuit imprimé 22 des capteurs.

Un capot 40 ferme un compartiment supérieur du corps 7 logeant le support de palier supérieur 43 et les circuits 22 portant les capteurs à effet hall 28. Un autre capot 42 fixé à l'extérieur du corps 7 au niveau des parties supérieures 36 et de la partie centrale haute 37 abrite les connexions électriques liant les fiches 8 aux broches des circuits 22 et des enroulements de stator 9 et 10.

Le fonctionnement du dispositif, selon l'invention, sera maintenant commenté.

La position du moteur 5 détermine au travers du réducteur 4 la position du boisseau 3. Il a été vu que la connaissance de la position du moteur à 15° près permet au travers d'un réducteur à forte réduction d'avoir une précision sur la position du boisseau de l'ordre du centième de degré. Du fait de ce réducteur, de l'utilisation systématique de roulement, de butée à billes, les frottements sont réduits et une puissance inférieure à 5 watts est suffisante pour alimenter la vanne.

L'information de position du rotor du moteur 5 connue à partir des aimants 29 et des capteurs 28 est suffisante pour commander la commutation des enroulements du stator 9 ou 10 qui est en service. Ainsi, les mêmes capteurs permettent d'assurer à la fois la fonction de commutation des enroulements du stator et la fonction de connaissance de la position du boisseau. A cette fin, ces capteurs sont couplés à des moyens non représentés de commutation des enroulements du stator 9, 10 en service et à des moyens également non représentés de détection de la position du boisseau 3 entrant dans une boucle de régulation du débit de carburant.

En cas d'interruption de l'alimentation électrique du moteur, le boisseau reste dans la position qu'il occupait au moment de la coupure. Ceci en raison du fait que le couple induit par les forces réactrices dues au débit de carburant dosé est inférieur à la somme des couples résistants suivants

- couple de frottement sec du moteur réducteur,
- couples dus aux moyens élastiques de rattrapage de jeux 50, 53 du réducteur,
- couple dû aux pertes fer par hystérésis du moteur.

Cette faculté d'auto-maintien de la position du boisseau en cas de perte de contrôle est très importante car la perte de contrôle n'entraîne pas de discontinuité dans l'alimentation des moteurs.

Un autre aspect de sécurité provient du fort couple moteur disponible au niveau du boisseau. Bien que le couple moteur soit faible, de l'ordre de quelques millinewtons.mètre, du fait du fort rapport de réduction, on dispose au niveau du boisseau d'un couple de 15 à 20 decanewtons.mètre. Ce couple est suffisant pour cisailler un éventuel copeau métallique entre la fourrure et le boisseau. Ainsi, un tel copeau n'empêche pas le fonctionnement de la vanne.

Enfin, du fait que le moteur est sans balai on évite tous les problèmes de contact entre des balais et un collecteur situé sur le rotor. On augmente ainsi la sûreté de fonctionnement et la fiabilité de la vanne.

**Revendications**

1. Vanne de carburant à commande directe comportant :

    - un ensemble de distribution de carburant comportant

        • une ouverture d'arrivée (1) de carburant
        • une fourrure (2) comportant une première ouverture (23)
        • un boisseau (3) rotatif dans la fourrure selon un axe de rotation du boisseau et comportant une seconde ouverture (19)
        • une sortie de carburant dont une section d'ouverture est fonction d'une surface de coïncidence entre la première ouverture (23) de la fourrure (2) et la seconde ouverture (19) du boisseau

    - des moyens de commande de la position du boisseau permettant de faire varier la valeur de la section de coïncidence entre les première (23) et seconde (19) ouvertures,

vanne **caractérisée en ce que** les moyens de commande de la position du boisseau comportent logés dans un corps (7) de vanne communiquant avec l'ensemble de distribution,

    - un moteur électrique (5) rotatif autour d'un axe AA', sans balai, ce moteur entraînant un ensemble réducteur (4) mécanique à engrenage, cet ensemble comportant un arbre d'entrée (16) et un pignon ou arbre de sortie (17) de l'ensemble réducteur (4), en sorte qu'un mouvement du moteur entraîne un mouvement de rotation du boisseau et une modification de la surface de coïncidence entre les première (23) et seconde (19) ouvertures, l'ouverture d'arrivée du carburant ayant une section fixe, perpendiculaire à l'axe de rotation du boisseau.

2. Vanne de carburant selon la revendication 1, **caractérisée en ce que** le moteur électrique (5) comporte deux stators (9,10) redondants commutables.

3. Vanne de carburant selon la revendication 1, **caractérisée en ce que** le moteur comporte un rotor (11) monobloc disposant de pans plats disposé selon une direction axiale du rotor.

4. Vanne de carburant selon la revendication 1, **caractérisée en ce que** le moteur (5) comporte des moyens (28, 29) de capture de la position angulaire du moteur.

5. Vanne de carburant selon la revendication 4, **caractérisée en ce que** les moyens de capture de la position angulaire comportent des aimants (29) placés sur chacun des pans plats du rotor et des capteurs (28) à effet hall.

6. Vanne selon la revendication 1, **caractérisée en ce que** le corps (7) comporte du haut vers le bas, selon la direction axiale AA', une extrémité supérieure (36), une partie centrale haute (37), une partie centrale basse (38) et une extrémité inférieur (49), l'extrémité supérieure (36) recevant un support (43) de palier supérieur fermant de façon étanche la partie centrale haute (37) logeant le moteur (5), la partie centrale basse (38) logeant le réducteur (4) et l'extrémité inférieure recevant de façon étanche l'ensemble de distribution de carburant.

7. Vanne selon la revendication 6, **caractérisée en ce que** le support (43) de palier supérieur reçoit un roulement (14) guidant une extrémité supérieure d'un axe du rotor (11) du moteur (5), une extrémité inférieure de cet axe étant reçue dans un roulement (15) portée par un support (30) intermédiaire de palier logé dans la partie centrale basse (38) du corps (7).

8. Vanne selon la revendication 7, **caractérisée en ce que** des moyens de mise en contrainte (39) mettent en contrainte, selon la direction axiale les roulements (14,15) de guidage des extrémités supérieure et inférieure de l'axe du rotor (11) du moteur (5).

9. Vanne selon la revendication 7, **caractérisée en ce que** le support (30) intermédiaire de palier loge, en outre, un ensemble de roulements (45,47) guidant une extrémité supérieure de pignons ou d'axes de roues du réducteur (4), une extrémité inférieure de ces pignons étant guidée dans des roulements (54,35) logés dans un support (48) de palier inférieur.

10. Vanne selon la revendication 1, **caractérisée en ce que** le réducteur est équipé de moyens (50, 53) de réduction de jeu.

11. Vanne selon la revendication 1, **caractérisée en ce que** le boisseau (3) est monté dans la fourrure (2) sur des roulements (24) situés entre la fourrure (2) et le boisseau (3).

12. Vanne selon la revendication 1, **caractérisée en ce que** la fourrure (2) comporte extérieurement des paliers cylindriques (60, 61), l'un (60) proche du corps (7) et l'autre (61) plus éloigné du corps (7), le palier (61) le plus éloigné ayant un diamètre plus petit que celui (60) le plus proche du corps.

13. Vanne selon la revendication 1, **caractérisée en ce qu'**une butée à bille (57) cale dans la direction axiale AA', le boisseau (3) contre la fourrure (2).

14. Vanne selon la revendication 9, **caractérisée en ce que** le boisseau (3) est équipé d'une butée (52), prévue pour venir en butée sur des butées (55, 66) logées dans le support (48) de palier inférieur.

15. Vanne selon la revendication 1, **caractérisée en ce que** le moteur (5) a un couple de quelques millinewtons.mètre produisant par l'intermédiaire du réducteur (4) un couple de 15 à 20 decanewtons.mètre.

16. Vanne selon la revendication 4, **caractérisée en ce que** les moyens (28) de capture de la position du rotor sont couplés à des moyens de commutation d'enroulements de stator (9, 10) du moteur et à des moyens de détection de la position du boisseau (3).

17. Vanne selon la revendication 1, **caractérisée en ce que** l'ouverture (23) du boisseau (3) est constituée par des fentes découpées dans une paroi extérieure du boisseau (3), l'ouverture présentant une symétrie de révolution autour d'un axe de rotation du boisseau.

18. Vanne selon la revendication 17, **caractérisée en ce que** chaque fente a un bord dont la distance à un plan de référence perpendiculaire à l'axe de rotation du boisseau est croissante de façon exponentielle par rapport à une valeur de rotation angulaire autour de l'axe du boisseau.

19. Vanne selon la revendication 16, **caractérisée en ce qu'**elle comporte des connecteurs (8) électriques enfichables.

**Patentansprüche**

1. Treibstoffventil mit direkter Steuerung, umfassend:

   - eine Treibstoffverteilanordnung, umfassend

     • eine Treibstoffeingangsöffnung (1)
     • eine Buchse (2) umfassend eine erste Öffnung (23)
     • einen Kegel (3), der in der Buchse um eine Kegelrotationsachse drehbar ist und eine zweite Öffnung (19) umfaßt
     • einen Treibstoffausgang, dessen Öffnungsquerschnitt eine Funktion einer Koinzidenzfläche zwischen der ersten Öffnung (23) der Buchse (2) und der zweiten Öffnung (19) des Kegels ist, und

   - Mittel zur Steuerung der Kegelposition, die es erlauben, den Wert des Koinzidenzquerschnitts zwischen der ersten (23) und der zweiten (19) Öffnung zu variieren,

   **dadurch gekennzeichnet, daß** die Mittel zur Steuerung der Kegelposition einen um eine Achse AA' drehbaren bürstenlosen Elektromotor (5) umfassen, der in einem mit der Verteilanordnung in Verbindung stehenden Ventilkörper (7) aufgenommen ist, wobei dieser Motor eine mechanische Untersetzergetriebeanordnung antreibt, wobei diese Anordnung eine Eingangswelle (16) sowie ein Ausgangsrad oder eine Ausgangswelle (17) der Untersetzeranordnung (4) umfaßt, derart, daß eine Bewegung des Motors eine Rotationsbewegung des Kegels und eine Änderung der Koinzidenzfläche zwischen der ersten (23) und der zweiten (19) Öffnung bewirkt, wobei die Treibstoffeingangsöffnung einen zur Kegelrotationsachse orthogonalen festen Querschnitt hat.

2. Treibstoffventil nach Anspruch 1, **dadurch gekennzeichnet, daß** der Elektromotor (5) zwei umschaltbare redundante Statoren (9, 10) umfaßt.

3. Treibstoffventil nach Anspruch 1, **dadurch gekennzeichnet, daß** der Motor einen einstückigen Rotor (11) umfaßt, der über ebene Flächen verfügt, die längs einer Axialrichtung des Rotors angeordnet sind.

4. Treibstoffventil nach Anspruch 1, **dadurch gekennzeichnet, daß** der Motor (5) Mittel (28, 29) zum Messen der Winkelposition des Motors umfaßt.

5. Treibstoffventil nach Anspruch 4, **dadurch gekennzeichnet, daß** die Mittel zum Messen der Winkelposition Magnete (29) umfassen, die auf jeder der ebenen Flächen des Rotors angeordnet sind, sowie Hallsonden (28).

6. Ventil nach Anspruch 1, **dadurch gekennzeichnet, daß** der Körper (7) von oben nach unten entlang der Axialrichtung AA' ein oberes Ende (36), einen oberen Zentralbereich (37), einen unteren Zentralbereich (38) sowie ein unteres Ende (49) umfaßt, wobei das obere Ende (36) eine obere Lagerstütze (43) aufnimmt, die den den Motor (5) aufnehmenden oberen Zentralbereich (37) dicht abschließt, wobei der untere Zentralbereich (38) den Untersetzer (4) aufnimmt, und wobei das untere Ende die Treibstoffverteilanordnung dicht aufnimmt.

7. Ventil nach Anspruch 6, **dadurch gekennzeichnet, daß** die obere Lagerstütze (43) ein Lager (14) aufnimmt, das ein oberes Ende einer Achse des Rotors (11) des Motors (5) führt, wobei ein unteres Ende dieser Achse in einem Lager (15) aufgenommen ist, das von einer Zwischenlagerstütze (30) getragen wird, die im unteren Zentralbereich (38) des Körpers (7) aufgenommen ist.

8. Ventil nach Anspruch 7, **dadurch gekennzeichnet, daß** Mittel zum Unterspannungsetzen (39) die Lager (14, 15) zur Führung des oberen und des unteren Endes der Achse des Rotors (11) des Motors (5) entlang der Axialrichtung unter Spannung setzen.

9. Ventil nach Anspruch 7, **dadurch gekennzeichnet, daß** die Zwischenlagerstütze (30) ferner eine Lageranordnung (45, 47) aufnimmt, die ein oberes Räder- oder Räderachsenende des Untersetzers (4) führt, wobei ein unteres Ende dieser Räder in Lagern (54, 35) geführt wird, die in einer unteren Lagerstütze (48) aufgenommen sind.

10. Ventil nach Anspruch 1, **dadurch gekennzeichnet, daß** der Untersetzer mit Spielverringerungsmitteln (50, 53) ausgestattet ist.

11. Ventil nach Anspruch 1, **dadurch gekennzeichnet, daß** der Kegel (3) in der Buchse (2) auf Lagern (24) montiert ist, die zwischen der Buchse (2) und dem Kegel (3) angeordnet sind.

12. Ventil nach Anspruch 1, **dadurch gekennzeichnet, daß** die Buchse (2) außen zylindrische Lager (60, 61) umfaßt, das eine (60) nahe am Körper (7) und das andere (61) weiter entfernt vom Körper (7), wobei das weiter entfernte Lager (61) einen kleineren Durchmesser aufweist als das näher am Körper gelegene (60).

13. Ventil nach Anspruch 1, **dadurch gekennzeichnet, daß** ein Kugelanschlag (57) den Kegel (3) in der Axialrichtung AA' gegen die Buchse (2) blockiert.

14. Ventil nach Anspruch 9, **dadurch gekennzeichnet, daß** der Kegel (3) mit einem Anschlag (52) ausgestattet ist, der dazu vorgesehen ist, in Anschlag gegen Anschläge (55, 66) zu gelangen, die in der unteren Lagerstütze (48) aufgenommen sind.

15. Ventil nach Anspruch 1, **dadurch gekennzeichnet, daß** der Motor (5) ein Moment von einigen Millinewton.Meter aufweist, das mittels des Untersetzers (4) ein Moment von 15 bis 20 Dekanewton.Meter erzeugt.

16. Ventil nach Anspruch 4, **dadurch gekennzeichnet, daß** die Mittel (28) zum Messen der Rotorposition gekoppelt sind mit Mitteln zum Umschalten der Wicklungen des Stators (9, 10) des Motors sowie mit Mitteln zur Erfassung der Position des Kegels (3).

17. Ventil nach Anspruch 1, **dadurch gekennzeichnet, daß** die Öffnung (23) des Kegels (3) durch Schlitze gebildet ist, die in einer Außenwand des Kegels (3) geschnitten sind, wobei die Öffnung eine Rotationssymmetrie um eine Rotationsachse des Kegels aufweist.

18. Ventil nach Anspruch 17, **dadurch gekennzeichnet, daß** jeder Schlitz einen Rand aufweist, dessen Abstand von einer zur Rotationsachse des Kegels orthogonalen Referenzebene exponentiell bezüglich eines Winkelrotationswerts um die Kegelachse zunimmt.

19. Ventil nach Anspruch 16, **dadurch gekennzeichnet, daß** es elektrische Steckverbinder (8) umfaßt.

**Claims**

1. Fuel valve with direct control comprising:

   - a fuel distribution assembly comprising:

     • a fuel inlet opening (1),
     • a bushing (2) comprising a first opening (23),

- • a plug (3) rotating in the bushing about an axis of rotation of the plug and comprising a second opening (19),
- • a fuel outlet with an opening section that depends on the overlapping area between the first opening (23) in the bushing (2) and the second opening (19) in the plug

  - means of controlling the position of the plug in order to vary the value of the overlapping section between the first (23) and second (19) openings,

  the valve being **characterized in that** the means of controlling the plug position comprise the following, housed in a valve body (7) communicating with the distribution assembly,

  - a brushless electric motor (5) rotating around a shaft AA', this motor driving a mechanical reduction gear assembly (4), this assembly comprising an input shaft (16) and an output pinion or shaft (17) from the reduction gear assembly (4), such that a motor rotation movement drives a rotation movement of the plug and changes the overlapping area of the first (23) and second (19) openings, the fuel inlet opening comprising a fixed section, perpendicular to the axis of rotation of the plug.

2. Fuel valve according to claim 1, **characterized in that** the electric motor (5) is fitted with two switchable redundant stators (9, 10).

3. Fuel valve according to claim 1, **characterized in that** the motor comprises a single-piece rotor (11) with flat sides laid out along an axial direction of the rotor.

4. Fuel valve according to claim 1, **characterized in that** the motor (5) comprises means (28, 29) of capturing the angular position of the motor.

5. Fuel valve according to claim 4, **characterized in that** the means of capturing the angular position comprise magnets (29) placed on each of the flat sides of the rotor and Hall effect sensors (28).

6. Valve according to claim 1, **characterized in that** the body (7) comprises working from the top towards the bottom along the axial direction AA', firstly a top end (36) and then an upper central part (37), a lower central part (38) and a lower end (49), the upper end (36) being fitted with an upper bearing block support (43) enclosing the upper central part (37) containing the motor (5), the lower central part (38) housing the reduction gear (4) and the lower end into which the fuel distribution assembly fits in a sealed manner.

7. Valve according to claim 6, **characterized in that** the upper bearing block support (43) is fitted with a bearing (14) that guides an upper end of a shaft of the rotor (11) of motor (5), a lower end of this shaft fitting into a bearing (15) in an intermediate bearing block support (30) housed in the lower central part (38) of the body (7).

8. Valve according to claim 7, **characterized in that** the means (39) are provided to apply axial thrust on the guide bearings (14, 15) of the top and bottom ends of the shaft of the rotor (11) of motor (5).

9. Valve according to claim 7, **characterized in that** the intermediate bearing block support (30) also houses a set of bearings (45, 47) that guide an upper end of the pinions or shafts of the wheels of the reduction gear (4), a lower end of these pinions being guided in the bearings (54, 35) housed in a lower bearing block support (48).

10. Valve according to claim 1, **characterized in that** the reduction gear is equipped with clearance reduction means (50, 53).

11. Valve according to claim 1, **characterized in that** the plug (3) is installed in the bushing (2) on bearings (24) located between the bushing (2) and the plug (3).

12. Valve according to claim 1, **characterized in that** the there are cylindrical bearings (60, 61) on the outside of the bushing (2), one (60) close to the body (7) and the other (61) further from the body (7), the bearing (61) furthest from the body having a smaller diameter than the bearing (60) closer to the body.

13. Valve according to claim 1, **characterized in that** a ball thrust bearing (57) holds the plug (3) in the axial direction AA' in contact with the bushing (2).

14. Valve according to claim 9, **characterized in that** the plug (3) is equipped with a thrust bearing (52) designed to stop in contact with the stops (55, 66) housed in the support (48) of the lower bearing.

15. Valve according to claim 1, **characterized in that** the torque of the motor (5) is a few millinewton.meters, producing a torque of 15 to 20 decanewton. meters through the reduction gear (4).

16. Valve according to claim 4, **characterized in that** the means (28) of detecting the rotor position are coupled to means of switching the stator windings (9, 10) of the motor and means of detecting the position of the plug (3).

**17.** Valve according to claim 1, **characterized in that** the opening (23) of the plug (3) is composed of slits cutout in an outside wall of the plug (3), the opening having a symmetry of revolution about an axis of rotation of the plug.

**18.** Valve according to claim 17, **characterized in that** each slit has an edge for which the distance to a reference plan perpendicular to the axis of rotation of the plug is increasing exponentially with respect to a value of the angular rotation about the plug axis.

**19.** Valve according to claim 16, **characterized in that** it comprises plug-in electrical connectors (8).

FIG.1

FIG. 2

FIG. 3

FIG. 4